# EUROPEAN PATENT SPECIFICATION

(11) **EP 3 219 587 B1**
(45) Date of publication and mention of the grant of the patent: **14.07.2021**
(21) Application number: 17160962.1
(22) Date of filing: 14.03.2017
(51) Int. Cl.: B62D 25/16

(54) **MUDGUARD FOR VEHICLES**
KOTFLÜGEL FÜR FAHRZEUGE
GARDE-BOUE POUR VÉHICULES

(30) Priority: 16.03.2016 IT UA20161715
(43) Date of publication of application: 20.09.2017
(73) Proprietor: Lago Accessori S.r.l., 35014 Fontaniva (PD) (IT)
(72) Inventor: LAGO, Fabio, 35013 Cittadella PD (IT)
(74) Representative: Modiano, Micaela Nadia

(56) References cited:
- EP-A1- 0 151 381
- EP-A1- 1 619 108
- WO-A1-2004/056640
- CN-U- 203 473 018
- CN-U- 203 958 332
- CN-U- 203 958 335
- DE-A1- 3 925 773
- FR-A1- 2 424 170
- FR-A3- 2 571 012
- US-A- 3 876 229

## Description

The present invention relates to a mudguard for vehicles, in particular for trucks or semi-trailer trucks or articulated vehicles or double HGVs or trailers or semitrailers.

Nowadays it is known to make the mudguard as part of a vehicle, the function of which is mainly to prevent water or splashes or sand or mud or stones from being thrown up into the air by the rotating tire.

Conventional mudguards are usually constituted by a single body, metallic or plastic, with a curved shape of approximately 180 degrees that surrounds the upper surface of the wheels of the vehicle, with which further elements are later associated such as for example splash guards and/or elements that perform spray protection functions and elements for fixing to the vehicle.

A drawback that arises in such conventional mudguards consists in that the molds for making such mudguards in a single piece are very large and heavy, such that they are difficult to move and use and they further require the use of large-scale production systems, which entails an increase in the costs of producing and providing the final mudguard.

Modular mudguards are also known, such as for example the ones described in EP0916569B1, EP0893330B1, in DE8411742U1 and in FR2571012 which illustrate solutions in which the mudguard is obtained by way of assembling a plurality of construction elements.

Such solutions also have drawbacks in that the construction elements are interconnected to each other by way of multiple fixing means and small parts, such as for example elastic bands, screws, nuts and washers, which increase the time required for production and installation, therefore increase the costs of providing the final mudguard, and require frequent maintenance because of the necessity to change such means owing to the rapid wear that they undergo over time, as a result of the considerable stresses to which they are constantly subjected when the vehicle is being driven.

A further drawback consists in that each system is dedicated to a specific application, such as for example half-mudguard, round mudguard or flat-top mudguard, the choice of which is dictated by the construction characteristics of each different type of vehicle; it is therefore evident that the space available to install a mudguard, and as a consequence also the potential fixing points that the geometry of the vehicle presents, which can be used for fixing the mudguard, vary according to the type of vehicle to which the mudguards will be applied.

Thus FR2424170 is also known, which illustrates a mudguard that is designed especially to be applied to the rear drive wheels of tractor units and which specifically tackles the problem deriving from the damage caused to the upper part of the mudguard during the maneuvers of coupling to the tractor unit.

The mudguard illustrated is provided with two lateral portions that are provided with engagement means for fixing to the chassis of the tractor unit and with a central part constituted by a flexible blade that can be extended or rolled up.

Because of the flexible plate, such solution exhibits very ineffective protection during the normal driving of a vehicle, since the lamina is either removed or arranged on a plane that is parallel to that of the road surface, which reduces the aerodynamics of the mudguard and creates great turbulence during driving.

Also known are EP1486403 and US3876229 which are structurally complex and costly to provide and install.

US3876229 further tackles the problem, for paired wheels, of enabling the wheels to follow the progression of the roadway without touching the mudguard, and this means that there is a detectable ineffectiveness of protection during the normal road driving of a vehicle owing to the possible oscillation to which the various components are subjected.

Also known are CN203958332 and CN203473018; the former comprises a bracket, two plates and two deflectors with a join coupling system, which occurs on a transverse plane to the deflectors, quite unsafe; the bracket and the plates further require additional work to connect flaps, meaning that the mudguard is structurally complex.

CN203473018 is composed of two pieces, one of which has combshaped teeth, all arranged on the same plane and for the entire width of the piece, which engage axially with seats that are provided on the second piece; such solution exhibits the drawback of being subject to deformations in the joining region during use and to possible accidental disconnections or breakages owing to vibrations that can be encountered during use which are exacerbated by atmospheric agents such as rain or mud or snow or chippings, as a result therefore not ensuring an optimal level of protection.

Furthermore, such solution appears to be more a wheelbox than a true mudguard, since it has typical points for coupling to a superstructure; it therefore should be accommodated in a body that is therefore provided with a structure above that accommodates it.

The aim of the present invention is therefore to resolve the above mentioned technical problems, eliminate the drawbacks in the cited known art and therefore devise a mudguard for vehicles that offers an optimal level of protection against atmospheric agents and a wide versatility of use, and which is obtainable rapidly and easily.

Within this aim, an object of the invention is to provide a mudguard for vehicles that makes it possible to achieve a saving in the costs of making and assembling it.

Another object of the invention consists of providing a mudguard for vehicles that can be made using a mold of reduced dimensions, weight and cost.

Another object of the invention consists of providing a mudguard for vehicles that has a good visual and aesthetic impact.

Another object of the invention is to provide a mudguard for vehicles that is structurally simple and is low cost.

This aim and these and other objects which will become better apparent hereinafter are achieved by a mudguard 1 for vehicles, characterized in that it is constituted by at least one first half-mudguard 2 that has, on at least one first free end 3 which, during use, is arranged above the tire substantially at approximately the diameter of the tire at right angles to the ground, engagement means 4a and grip means 5a for optional detachable coupling with a separate and identical second half-mudguard 6, which is also provided with engagement means 4b and grip means 5b, or with a finishing end portion 7, optionally associated with a chassis of said vehicle, or with a flat element 26 or with a strip 27 for lateral protection, each one of said engagement means 4a, 4b being arranged adjacent respectively to each one of the grip means 5a, 5b so that each one affects approximately half of the transverse extent of the respective first free end 3.

Further characteristics and advantages of the invention will become better apparent from the detailed description of a particular, but not exclusive, embodiment of the invention, which is illustrated by way of non-limiting example in the accompanying drawings wherein:
Figure 1 is a perspective view of the mudguard constituted by a first half-mudguard and by a second half-mudguard;
Figure 2 is a perspective view of the mudguard in the previous figure, uncoupled into two components;
Figure 3 is a view from above of the mudguard in Figure 1;
Figure 4a is a perspective view of the first half-mudguard in a view from inside;
Figure 4b is a front elevation view of the second half-mudguard in a view from inside;
Figure 5 is a detail of Figure 4a;
Figure 6 is a detail of Figure 4a;
Figure 7 is a detail of Figure 4a;
Figure 8 is a perspective view from below of the first half-mudguard, from inside;
Figure 9 is a first partially cross-sectional perspective view, taken along the line IX-IX of Figure 3, of the mudguard constituted by a first half-mudguard and by a second half-mudguard almost completely coupled together;
Figure 10 is a second partially cross-sectional perspective view, similar to the previous one, of the mudguard;
Figure 11 is a detail of Figure 10;
Figure 12 is a cross-sectional view of the mudguard constituted by a first half-mudguard and a second half-mudguard, taken along the line XII-XII of Figure 3;
Figure 13 is a perspective view of a first half-mudguard with which a finishing end portion and a splash guard are associated;
Figure 14 is a perspective view of the mudguard constituted by a first half-mudguard and by a second half-mudguard with a flat element interposed between them;
Figure 15 is a perspective view of the mudguard constituted by a first half-mudguard and by a second half-mudguard with a strip interposed between them;
Figure 16 is a perspective view of the mudguard constituted by a first half-mudguard and by a second half-mudguard and by elements that perform spray protection functions;
Figure 17 is a perspective view of the mudguard constituted by a first half-mudguard and by a second half-mudguard with which brackets are associated for interconnection with the chassis of a vehicle.

In the exemplary embodiments illustrated below, individual characteristics shown in relation to specific examples may in reality be interchanged with other, different characteristics, existing in other exemplary embodiments.

With reference to the figures, the reference numeral 1 generally designates a mudguard for vehicles, in particular for trucks or semi-trailer trucks or articulated vehicles or double HGVs or trailers or semitrailers.

The mudguard 1 is constituted by at least one first half-mudguard 2 which has transversely an approximately C-shaped curved configuration, which lies substantially on a circular arc that subtends an angle of substantially 90 degrees.

The first half-mudguard 2 has, at a first free end 3 which, during use, is arranged above the tire substantially at approximately the diameter of the tire at right angles to the ground, engagement means 4a and grip means 5a for detachable coupling with a separate and identical second half-mudguard 6 or, alternatively, with a finishing end portion 7, optionally associated with the chassis of the vehicle, or with a flat element 26 or with a strip 27 for lateral protection.

The second half-mudguard 6, like the finishing end portion 7, the flat element 26 and the strip 27, have in turn engagement means and grip means that are analogous to those present in the first half-mudguard 2.

The engagement means 4a and grip means 5a of the first half-mudguard 2 are arranged mutually adjacent and each one affects about half of the transverse extent of the first free end 3.

The first free end 3 of the first half-mudguard 2 is transversely substantially C-shaped and centrally has a V-shaped split 8 that transversely divides, approximately midway, the first free end 3 so as to define a first, male tab 9a with which a second, female tab 10a is contiguous.

Each one of the first tab and second tab 9a, 10a is transversely substantially L-shaped so as to define respectively substantially horizontal and larger first wings 11a, 12a, which are mutually laterally adjacent and separated by the V-shaped split 8, and second wings 11b, 12b, which are substantially vertical with respect to the previous ones and are smaller, and which are directed downward with respect to the first wings 11a, 12a and are blended with them according to a curved shape.

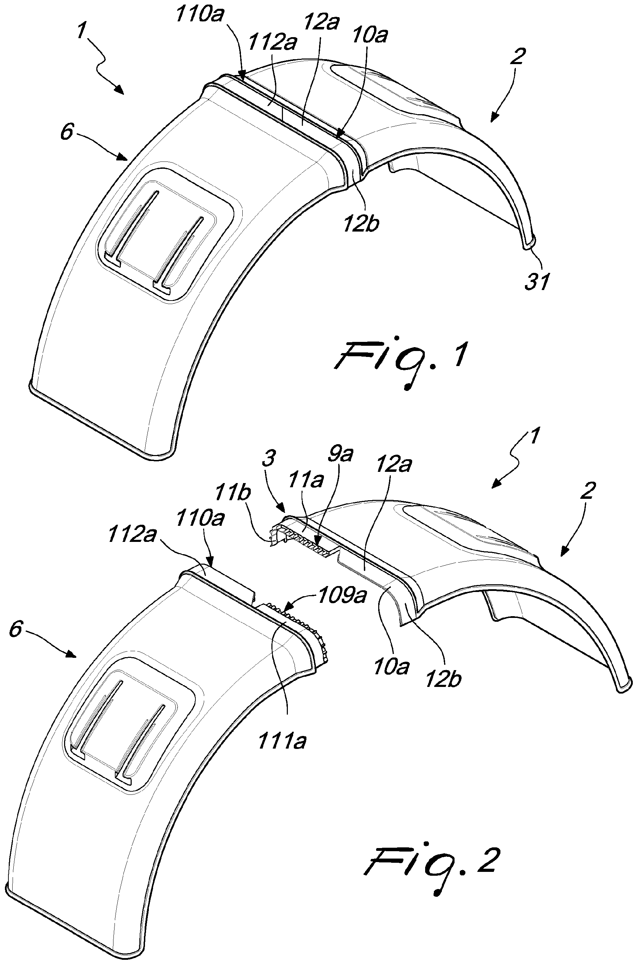

In the embodiment shown in Fig. 1, by way of non-limiting example, in the first half-mudguard 2 the engagement means 4a are stably associated in a lower region with the first, male tab 9a and are constituted by a first tooth, by a second tooth and by a third tooth 13a, 13b, 13c, substantially triangular in shape, each one protruding below the first tab 9a with the apex 14 adjacent to the external perimetric edge 15 of the first, male tab 9a.

Each one of the first, second and third teeth 13a, 13b, 13c extends at right angles to the external perimetric edge 15, on the opposite side therefrom, and ends with a step 16 that is perpendicular to the lower surface 17 of the first, male tab 9a.

Preferably the first tooth 13a protrudes below the lower surface 17 of the first wing 11a of the first tab 9a proximate to the V-shaped split 8.

Preferably the second tooth 13b protrudes below the lower surface 17 of the first wing 11a of the first tab 9a in an intermediate region between the V-shaped split 8 and the second wing 11b of the first, male tab 9a.

Preferably the third tooth 13c protrudes below the terminal end 18 of the second wing 11b of the first, male tab 9a.

In the first half-mudguard 2 the grip means 5a are provided at a flat base 19a of a U-shaped element 20a that protrudes below the second, female tab 10a; the element 20a defines, with respect to the overlying first wing 12a and to the second wing 12b, a cavity 21a.

The flat base 19a, like the cavity 21a, substantially affects the entire length of the second, female tab 10a so as to affect the first wing and the second wing 12a, 12b starting from a region proximate to the V-shaped split 8.

A plurality of spacers 25 extend at right angles to an upper surface 24 of the first, male tab 9a and are adapted to facilitate the centering and the placement of the first, second and third teeth 13a, 13b, 13c, the first spacers 25 being accommodated in the cavity 121b.

The grip means 5a are constituted by a first, by a second and by a third seat 23a, 23b, 23c, which are provided on the flat base 19a and are adapted to stably accommodate engagement means such as a first, a second and a third tooth 13d, 13e, 13f which are provided in the second half-mudguard 6 and which constitute engagement means 4b.

Preferably the first seat 23a is provided on the flat base 19a, at the first wing 12a of the second tab 10a proximate to the V-shaped split 8.

Preferably the second seat 23b is provided on the flat base 19a, at the first wing 12a of the second tab 10a in an intermediate region between the V-shaped split 8 and the second wing 12b of the second, female tab 10a.

Preferably the third seat 23c is provided on the flat base 19a, at the terminal end of the second wing 12b of the second, female tab 10a.

The first, the second and the third tooth 13d, 13e, 13f are provided on the first wing 111a of the first, male tab 109a of the second half-mudguard 6 and are analogous to the first, second and third teeth 13a, 13b, 13c of the first half-mudguard 2, the engagement means 4a thus finding a match with the engagement means 4b.

Analogous engagement means (not shown) are provided on the finishing end portion 7, on the flat element 26 and on the strip 27 for lateral protection, again at the respective first, male tab.

On the second half-mudguard 6, on the finishing end portion 7, on the flat element 26 and on the strip 27 for lateral protection, there are also engagement means 4b and grip means 5b, which are analogous to the ones provided on the first half-mudguard 2 but are arranged alternated with respect to the first half-mudguard 2, i.e. the engagement means 4a of the first half-mudguard 2 face, in the step for interconnection between the two elements, toward the grip means 5b which are provided on the second half-mudguard 6 or on the finishing end portion 7 or on the flat element 26 or on the strip 27, so that they engage each other.

The grip means 5b are also constituted by a first seat, a second seat and a third seat 123a, 123b, 123c, the seats being provided at a flat base 119b of an element 120b, which is analogous in shape and structure to the element 20a and defines a cavity 121b, and being adapted to stably accommodate the engagement means 4a, which are provided on the first half-mudguard 2 at the second, female tab 110a, which defines a first wing 112a.

Conversely, the grip means 5a of the first half-mudguard 2 face, in the step for interconnection between the two elements, toward the engagement means 4b which are provided on the second half-mudguard 6 or on the finishing end portion 7 or on the flat element 26 or on the strip 27 for lateral protection, so that they engage each other.

In the specific embodiment shown, in the initial step of the coupling between the first half-mudguard 2 and the second half-mudguard 6 or the finishing end portion 7 or the flat element 26, each one of the first, second and third teeth 13a, 13b, 13c, 13d, 13e, 13f arranges itself in axial alignment and at the respective first, second and third seats 23a, 23b, 23c, 123a, 123b, 123c: stable coupling is obtained when each one of the first, second and third teeth 13a, 13b, 13c, 13d 13e, 13f is pushed up until it is accommodated completely in the respective first, second and third seats 23a, 23b, 23c, 123a, 123b, 123c.

The invention can have numerous uses.

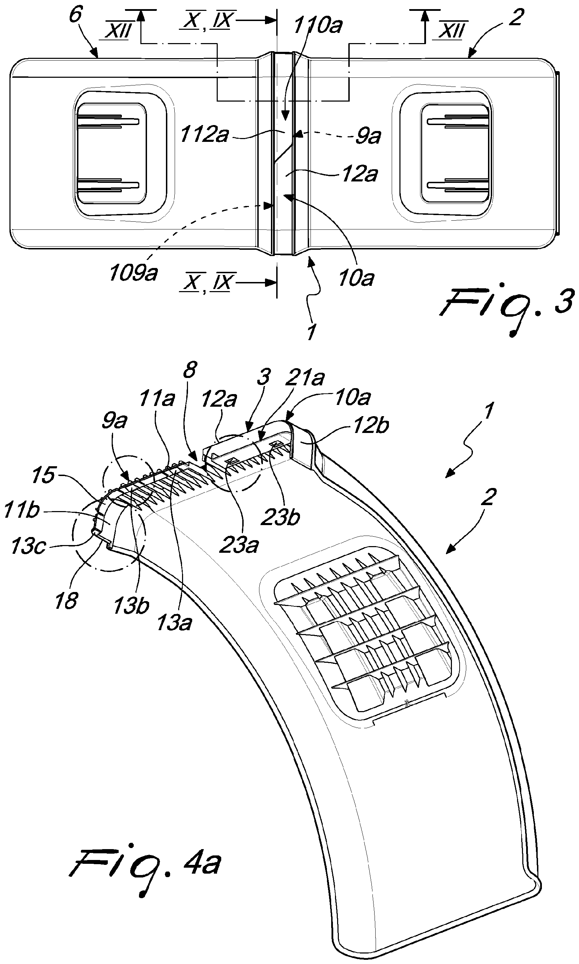

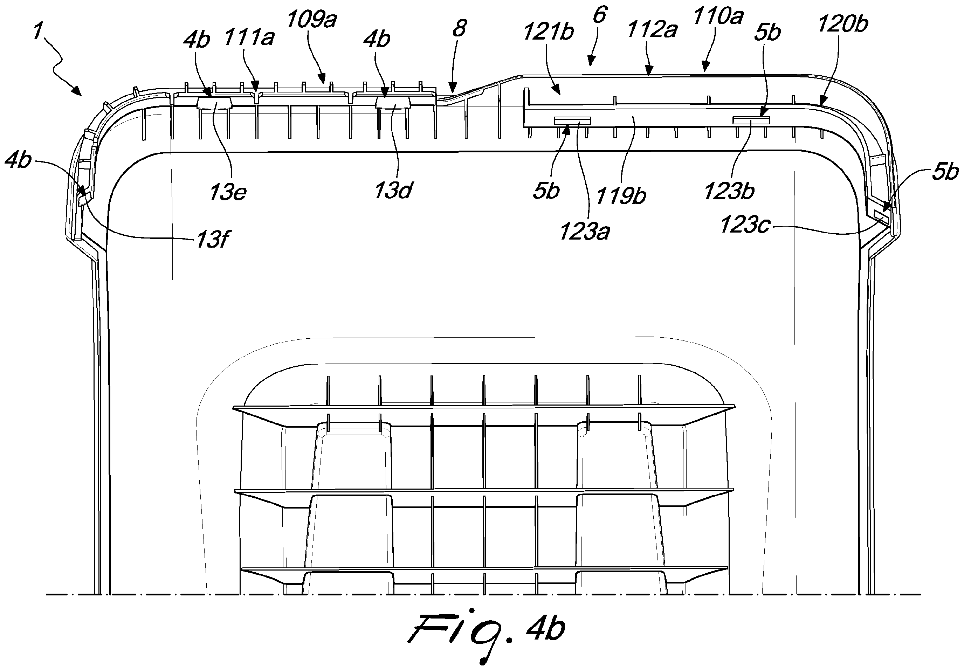

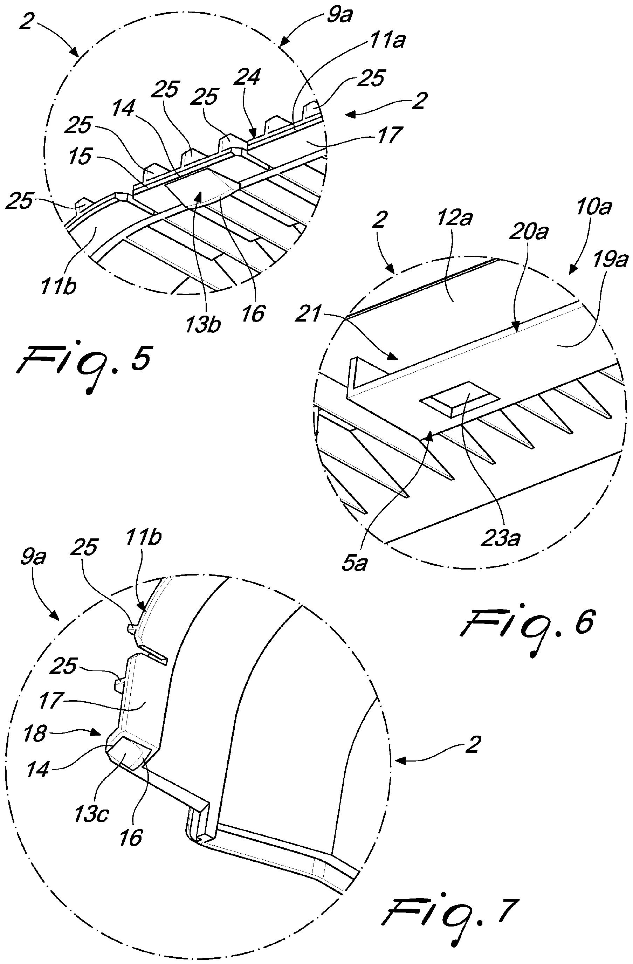

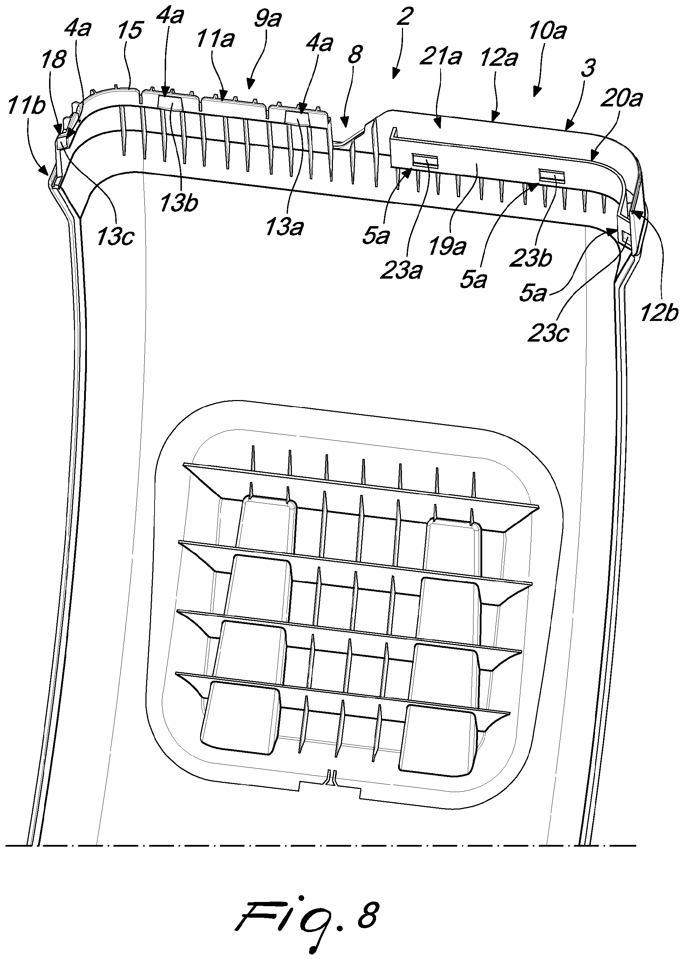

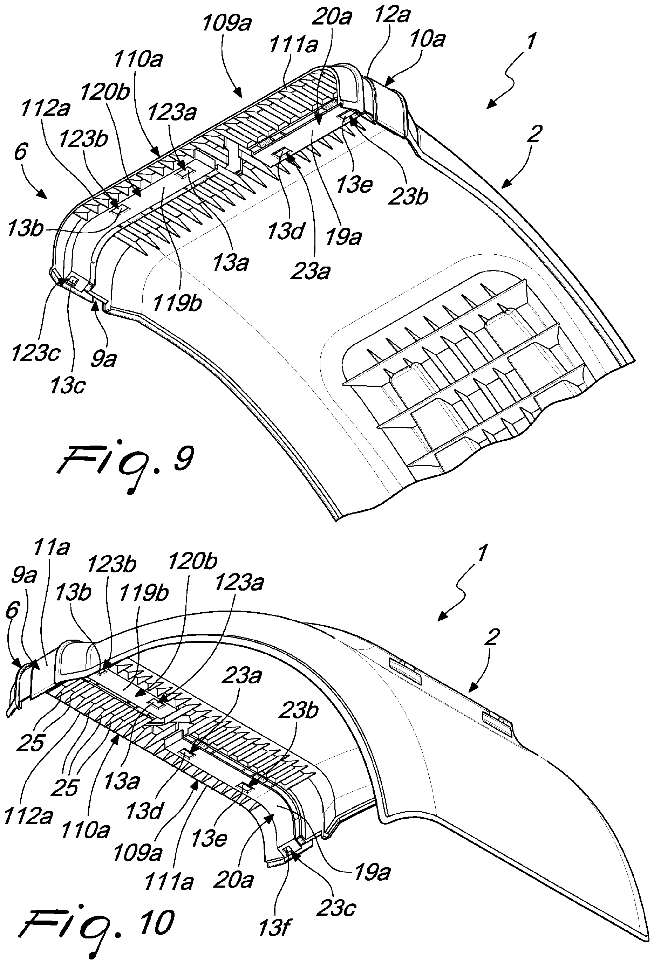

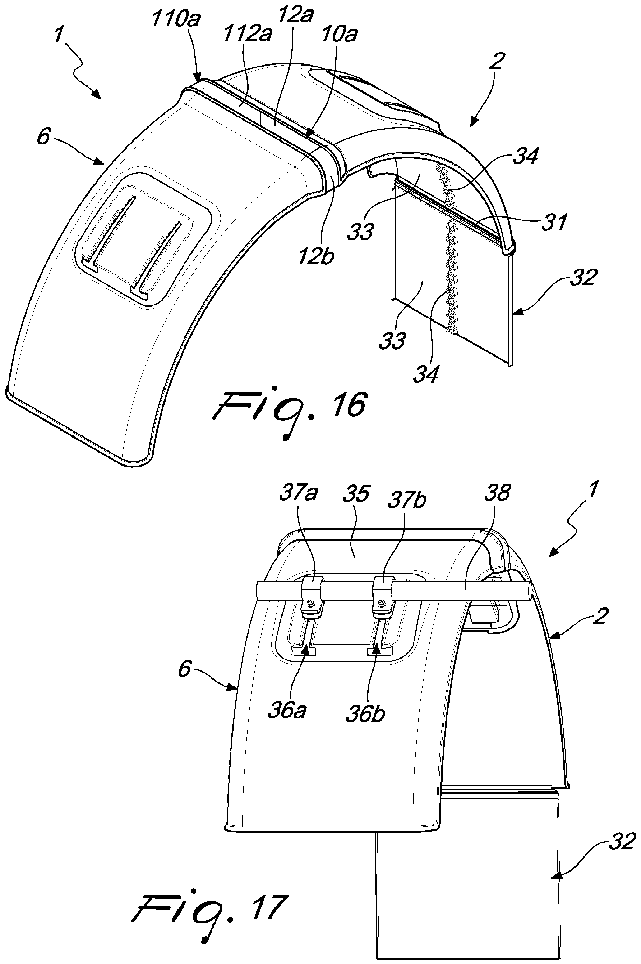

In the embodiment illustrated in Figures 1 to 12 and in Figures 16 and 17, by way of non-limiting example, a mudguard 1 is shown which is constituted by a first half-mudguard 2 coupled to the second half-mudguard 6.

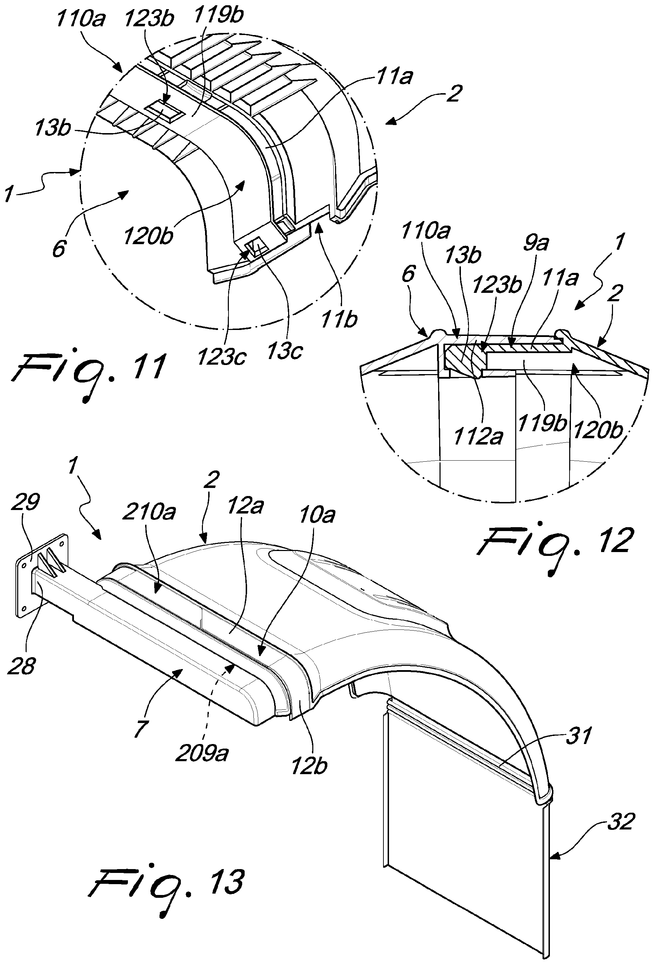

In the embodiment illustrated in Figure 13, by way of non-limiting example, a mudguard is shown which is composed of a first half-mudguard 2 coupled to the finishing end portion 7.

The finishing end portion 7 is substantially shaped like a parallelepiped and has at one end 28 a plate 29 that is adapted to be associated with the chassis of the vehicle, by way of adapted connection means.

In this case too, the finishing end portion 7 has, on a first, male tab 209a and on an adjacent second, female tab 210a, engagement means and grip means for detachable coupling with the first half-mudguard 2 which are analogous to the engagement means and grip means 4b, 5b which are present in the second half-mudguard 6.

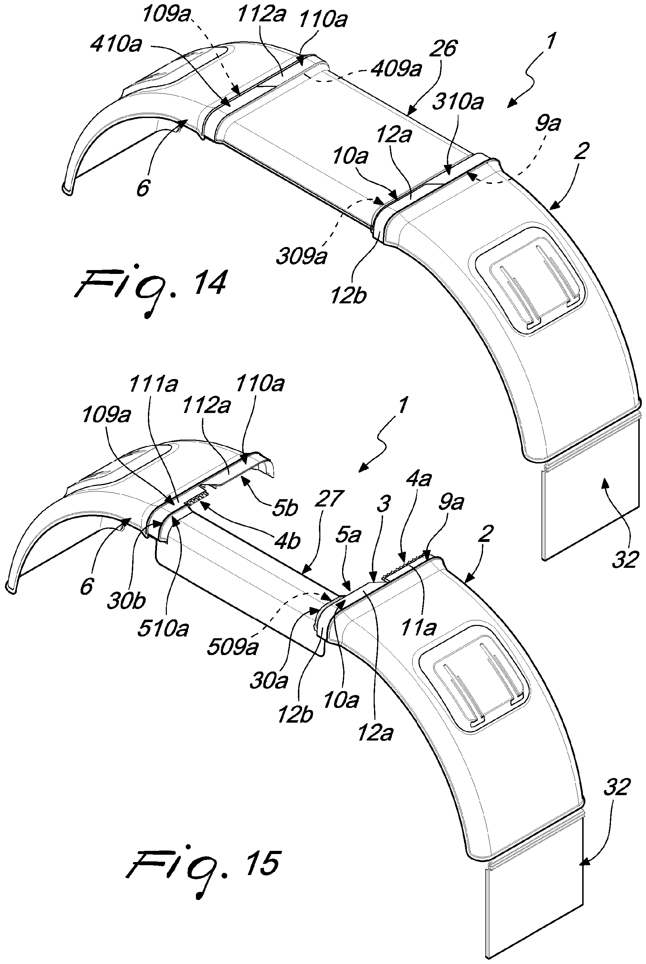

In the embodiment illustrated in Figure 14, by way of non-limiting example, a mudguard 1 is shown which is composed of a first half-mudguard 2 coupled to the flat element 26 which is in turn coupled to the second half-mudguard 6.

The flat element 26 is shaped substantially like a flat plate.

In this case too, at each one of the free ends of the flat element 26 there are, on a first, male tab 309a, 409a and on an adjacent second, female tab 310a, 410a, respectively engagement means and grip means for detachable coupling respectively with the first half-mudguard and the second half-mudguard 2, 6, which are analogous to the engagement means and grip means 4a, 5a, 4b, 5b which are present in the first half-mudguard and in the second half-mudguard 2, 6.

In the embodiment illustrated in Figure 15, by way of non-limiting example, a mudguard 1 is shown which is composed of a first half-mudguard 2 coupled with the strip 27 which is in turn coupled to the second half-mudguard 6.

The strip 27 has a substantially L-shaped transverse cross-section, in which the larger wing protrudes externally and below the fourth wing 12b of the second, female tab 10a of the first half-mudguard 2.

In this case too, at each one of the second free ends 30a, 30b of the strip 27 there are respectively, on a first, male tab 509a, engagement means for detachable coupling with the first half-mudguard 2 which are analogous to the engagement means 4a, 4b which are present in the first half-mudguard and in the second half-mudguard 2, 6, and, on a second, female tab 510a, grip means for detachable coupling with the second half-mudguard 6 which are analogous to the grip means 5a, 5b which are present in the first half-mudguard and in the second half-mudguard 2, 6.

Figures 13, 14, 15, 16 and 17 show a mudguard 1 which is composed of a first half-mudguard 2 with the lower free end 31 of which a splash guard 32 is stably associated and protrudes below the lower end 31.

The splash guard 32 is obtained from the same mold used to produce the first half-mudguard 2 at the same time.

Figure 16 shows a mudguard 1 which is composed of a first half-mudguard 2 and of a splash guard 32 on the internal surfaces 33 of which elements 34 are stably arranged which perform spray protection functions.

The elements 34 are obtained from the same mold used to produce the first half-mudguard 2 and the splash guard 32 at the same time.

Figure 17 shows a mudguard 1 which is composed of a first half-mudguard and of a second half-mudguard 2, 6 and of a splash guard 32; a pair of tracks 36a, 36b is stably provided on the external surface 35 of the second half-mudguard 6, for sliding a pair of fixing eyelets 37a, 37b in which a tube 38 is removably arranged and is associated with the chassis of the vehicle.

Thus it has been found that the invention fully achieves the intended aim and objects, a mudguard for vehicles having been devised that offers wide versatility of use and which can be obtained rapidly and easily by virtue of an assembly that can be carried out manually, without the use of tools, by virtue of the presence of the engagement means and grip means, described above, which are present in all the modular elements of the mudguard.

Furthermore, the peculiar structure of the mudguard makes it possible to obtain a plurality of combinations by keeping the curved end parts fixed, which are constituted by the first half-mudguard and second half-mudguard 2, 6, while varying the central part and optionally adding the flat element 26 or the strip 27 for lateral protection.

Alternatively one can also use the individual first half-mudguard 2, the terminal end 3 of which, in use, is arranged above the tire substantially at approximately the diameter of the tire at right angles to the ground, or one can optionally use the first half-mudguard 2 coupled to the finishing end portion 7, optionally associated with the chassis of the vehicle.

In addition to the first half-mudguard or second half-mudguard 2, 6, further elements can easily be integrated which are adapted to improve the performance of the mudguard 1, such as the splash guard 32, the elements 34 which perform spray protection functions, and/or the eyelets 37 which can slide on the fixing tracks 36.

It has further been found that the mudguard 1 for vehicles makes it possible to achieve a saving in the costs of making and assembling it, having eliminated all the fixing means and small parts, such as for example elastic bands, screws, nuts and washers.

It has also been found that the mudguard 1 for vehicles can be made using a mold of reduced dimensions and weight which can therefore be easily handled and used in small-scale production systems.

Furthermore, the mudguard 1 proper also features reduced weight, there being no unnecessary superimpositions or doublings of layers owing to the additional functions like the elements 34, which perform spray protection functions, and/or splash guard 32, by virtue of their integration in the mudguard 1 proper.

Finally it has been found that the mudguard 1 for vehicles has a good visual impact.

Obviously the invention is susceptible of numerous modifications and variations, all of which are within the scope of the appended claims.

The materials used as well as the dimensions of the individual components of the invention may be more pertinent according to specific requirements.

The various means of achieving certain different functions certainly need not coexist only in the embodiment shown, but may be present in many embodiments, even if they are not shown.

## Claims

1. A mudguard (1) for vehicles, comprising at least one first half-mudguard (2) that has, on at least one first free end (3) which, during use, is arranged above a tire substantially at approximately the diameter of the tire at right angles to the ground, engagement means (4a) and grip means (5a) for detachable coupling with:
a separate and identical second half-mudguard (6), which is also provided with engagement means (4b) and grip means (5b);
each one of said engagement means (4a, 4b) being arranged adjacent respectively to each one of said grip means (5a, 5b) so that each one affects half of the transverse extent of the respective first free end (3).

2. The mudguard (1) according to claim 1, **characterized in that** said first free end (3) is transversely substantially C-shaped and centrally has a V-shaped split (8) that transversely divides, approximately midway, said first free end (3) so as to define a first, male tab (9a, 109a) with which a second, female tab (10a, 110a) is contiguous.

3. The mudguard (1) according to claim 2, **characterized in that** each one of said first tab and second tab (9a, 10a) is transversely substantially L-shaped so as to define respectively a substantially horizontal and larger first wing (11a, 12a), mutually laterally adjacent and separated by said V-shaped split (8), and a second wing (11b, 12b), which is substantially vertical with respect to the previous ones and is smaller, directed downward with respect to said first wings (11a, 12a) and being blended with them according to a curved shape.

4. The mudguard (1) according to one or more of the preceding claims 2 to 3, **characterized in that** said engagement means (4a) of said first half-mudguard (2) are associated stably below said first, male tab (9a) and are constituted by at least one first tooth (13a), which protrudes below a lower surface (17) of said first wing (11a) of said first tab (9a), and by at least one third tooth (13c), which protrudes below a terminal end (18) of said second wing (11b) of said first, male tab (9a), said first half-mudguard (2) having transversely an approximately C-shaped curved configuration, which lies substantially on a circular arc that subtends an angle of substantially 90 degrees.

5. The mudguard (1) for vehicles according to one or more of the preceding claims 2 to 4, **characterized in that** said grip means (5a) of said first half-mudguard (2) are provided at a flat base (19a) of a U-shaped element (20a) that protrudes below said second, female tab (10a), and are constituted by at least one first seat (23a), which is provided on said flat base (19a) at said first wing (12a) of said second tab (10a), and by at least one third seat (23c), which is provided on said flat base (19a) at the terminal end of said second wing (12b) of said second, female tab (10a).

6. The mudguard (1) according to one or more of the preceding claims 2 to 5, **characterized in that** said engagement means (4a) are stably associated below said first, male tab (9a) and are constituted by a first tooth, a second tooth and a third tooth (13a, 13b, 13c), said first tooth (13a) protruding below a lower surface (17) of said first wing (11a) of said first tab (9a), substantially proximate to said V-shaped split (8), said second tooth (13b) protruding below said lower surface (17) of said first wing (11a) of said first tab (9a), substantially in an intermediate region between said V-shaped split (8) and said second wing (11b) of said first, male tab (9a), and said third tooth (13c) protruding substantially below a terminal end (18) of said second wing (11b) of said first, male tab (9a).

7. The mudguard (1) according to claim 6, **characterized in that** said first, second and third teeth (13a, 13b, 13c) are substantially triangular and protrude below said first tab (9a) with an apex (14) that is adjacent to an external perimetric edge (15) of said first, male tab (9a), each one of said first, second and third teeth (13a, 13b, 13c) extending at right angles to said external perimetric edge (15), on the opposite side therefrom, and ending with a step (16) that is perpendicular to said lower surface (17) of said first, male tab (9a).

8. The mudguard (1) according to one or more of the preceding claims 2 to 7, **characterized in that** said grip means (5a) of said first half-mudguard (2) are provided at a flat base (19a) of a U-shaped element (20a) that protrudes below said second, female tab (10a), said grip means (5a) being constituted by a first seat, by a second seat and by a third seat (23a, 23b, 23c), said first seat (23a) being provided on said flat base (19a), at said first wing (12a) of said second tab (10a) substantially proximate to said V-shaped split (8), said second seat (23b) being provided on said flat base (19a), at said first wing (12a) of said second tab (10a) substantially in an intermediate region between said V-shaped split (8) and said second wing (12b) of said second, female tab (10a), said third seat (23c) being provided on said flat base (19a), substantially at the terminal end of said second wing (12b) of said second, female tab (10a).

9. The mudguard (1) according to one or more of the preceding claims 2 to 8, **characterized in that** said element (20a) defines, with respect to said overlying first wing (12a) and to said second wing (12b), a cavity (21a), said flat base (19a) and said cavity (21a) affecting substantially the entire length of said second, female tab (10a) so as to affect said first wing and said second wing (12a, 12b) starting from a region proximate to said V-shaped split (8).

10. The mudguard (1) according to one or more of the preceding claims 2 to 9, **characterized in that** a plurality of spacers (25) extend at right angles to an upper surface (24) of said first, male tab (9a) and are adapted to facilitate the centering and the placement of said first, second and third teeth (13a, 13b, 13c), said first spacers (25) being accommodated in said cavity (121b).

11. The mudguard (1) according to one or more of the preceding claims 2 to 10, **characterized in that** said first, second and third seats (23a, 23b, 23c) are provided on said flat base (19a) and are adapted to stably accommodate said engagement means (4b) constituted by a first tooth, a second tooth and a third tooth (13d, 13e, 13f) provided in said second half-mudguard (6), said first, second and third teeth (13d, 13e, 13f) being provided on a first wing (111a) of said first, male tab (109a) of said second half-mudguard (6) and being analogous to said first, second and third teeth (13a, 13b, 13c) of said first half-mudguard (2), said engagement means (4a) thus finding a match with said engagement means (4b).

12. The mudguard (1) according to one or more of the preceding claims 2 to 11, **characterized in that** said grip means (5b) provided on said second half-mudguard (6) are constituted by a first seat, a second seat and a third seat (123a, 123b, 123c), said seats being provided at a flat base (119b) of an element (120b), which is analogous in shape and structure to said element (20a) and defines a cavity (121b), and being adapted to stably accommodate said engagement means (4a), which are provided on said first half-mudguard (2) at said second, female tab (110a), which defines a first wing (112a).

13. The mudguard (1) according to one or more of the preceding claims 2 to 12, **characterized in that** in the initial step of the coupling between said first half-mudguard (2) and said second half-mudguard (6), each one of said first, second and third teeth (13a, 13b, 13c, 13d, 13e, 13f) arranges itself in axial alignment and at the respective said first, second and third seats (23a, 23b, 23c, 123a, 123b, 123c), stable coupling being obtained when each one of said first, second and third teeth (13a, 13b, 13c, 13d 13e, 13f) is pushed up until it is accommodated completely in the respective said first, second and third seats (23a, 23b, 23c, 123a, 123b, 123c).

14. The mudguard (1) according to one or more of the preceding claims 2 to 13, **characterized in that** a pair of tracks (36a, 36b) is stably provided on the external surface (35) of said second half-mudguard (6) or on the external surface of said first half-mudguard (2), for sliding a pair of fixing eyelets (37a, 37b) in which a tube (38) is removably arranged and is associated with said chassis of said vehicle.

## Patentansprüche

1. Ein Kotflügel (1) für Fahrzeuge, der mindestens eine erste Kotflügelhälfte (2) umfasst, welche an mindestens einem ersten freien Ende (3), das während des Gebrauchs oberhalb eines Reifens im Wesentlichen an ungefähr dem Durchmesser des Reifens in einem rechten Winkel zum Boden angeordnet ist, Eingriffsmittel (4a) und Griffmittel (5a) zur lösbaren Kopplung mit Folgendem hat:
einer separaten und identischen zweiten Kotflügelhälfte (6), die ebenfalls mit Eingriffsmitteln (4b) und Griffmitteln (5b) ausgestattet ist;
wobei jedes der Eingriffsmittel (4a, 4b) entsprechend angrenzend an jedes der Griffmittel (5a, 5b) angeordnet ist, so dass jedes die Hälfte der transversalen Ausdehnung des entsprechenden ersten freien Endes (3) beeinflusst.

2. Der Kotflügel (1) gemäß Anspruch 1, **dadurch gekennzeichnet, dass** das erste freie Ende (3) transversal im Wesentlichen C-förmig ist und in der Mitte eine V-förmige Kerbe (8) hat, welche das erste freie Ende (3) ungefähr in der Mitte transversal spaltet, um eine erste, vorstehende Lasche (9a, 109a) zu bestimmen, an welche eine zweite, aufnehmende Lasche (10a, 110a) angrenzt.

3. Der Kotflügel (1) gemäß Anspruch 2, **dadurch gekennzeichnet, dass** sowohl die erste als auch die zweite Lasche (9a, 10a) transversal im Wesentlichen L-förmig sind, um entsprechend einen im Wesentlichen horizontalen und größeren ersten Flügel (11a, 12a) zu bestimmen, seitlich zueinander benachbart und durch die V-förmige Kerbe (8) getrennt, und einen zweiten Flügel (11b, 12b), der im Wesentlichen senkrecht zu den oben erwähnten und kleiner, abwärts mit Bezug auf die ersten Flügel (11a, 12a) gerichtet, ist und in einer Kurvenform in diese übergeht.

4. Der Kotflügel (1) gemäß einem oder mehreren der obigen Ansprüche 2-3, **dadurch gekennzeichnet, dass** die Eingriffsmittel (4a) der ersten Kotflügelhälfte (2) fest unterhalb der ersten, vorstehenden Lasche (9a) angeschlossen sind und aus mindestens einem ersten Zahn (13a) bestehen, der unterhalb einer unteren Oberfläche (17) des ersten Flügels (11a) der ersten Lasche (9a) hervorragt, und aus mindestens einem dritten Zahn (13c), der unterhalb eines abschließenden Endes (18) des zweiten Flügels (11b) der ersten, vorstehenden Lasche (9a) hervorragt, wobei die erste Kotflügelhälfte (2) transversal eine ungefähr C-förmige gekrümmte Konfiguration hat, die im Wesentlichen auf einem Kreisbogen liegt, der einen Winkel von im Wesentlichen 90 Grad schneidet.

5. Der Kotflügel (1) für Fahrzeuge gemäß einem oder mehreren der obigen Ansprüche 2-4, **dadurch gekennzeichnet, dass** die Griffmittel (5a) der ersten Kotflügelhälfte (2) an einer flachen Basis (19a) eines U-förmigen Elements (20a) angebracht sind, das unterhalb der zweiten, aufnehmenden Lasche (10a) vorsteht, und aus einem ersten Sitz (23a), der an der flachen Basis (19a) an dem ersten Flügel (12a) der zweiten Lasche (10a) angebracht ist, und einem dritten Sitz (23c) bestehen, der an der flachen Basis (19a) am abschließenden Ende des zweiten Flügels (12b) der zweiten, aufnehmenden Lasche (10a) angebracht ist.

6. Der Kotflügel (1) gemäß einem oder mehreren der obigen Ansprüche 2-5, **dadurch gekennzeichnet, dass** die Eingriffsmittel (4a) fest unterhalb der ersten, vorstehenden Lasche (9a) angebracht sind und aus einem ersten Zahn, einem zweiten Zahn und einem dritten Zahn (13a, 13b, 13c) bestehen, wobei der erste Zahn (13a) unterhalb einer unteren Oberfläche (17) des ersten Flügels (11a) der ersten Lasche (9a), im Wesentlichen angrenzend an die V-förmige Kerbe (8), vorsteht, der zweite Zahn (13b) unterhalb der unteren Oberfläche (17) des ersten Flügels (11a) der ersten Lasche (9a), im Wesentlichen in einem intermediären Bereich zwischen der V-förmigen Kerbe (8) und dem zweiten Flügel (11b) der ersten, vorstehenden Lasche (9a), vorsteht, und der dritte Zahn (13c) im Wesentlichen unterhalb eines abschließenden Endes (18) des zweiten Flügels (11b) der ersten, vorstehenden Lasche (9a) vorsteht.

7. Der Kotflügel (1) gemäß Anspruch 6, **dadurch gekennzeichnet, dass** der erste, der zweite und der dritte Zahn (13a, 13b, 13c) im Wesentlichen dreieckig sind und unterhalb der ersten Lasche (9a) mit einem Scheitelpunkt (14) vorstehen, der an eine externe Umfangskante (15) der ersten, vorstehenden Lasche (9a) angrenzt, wobei sowohl der erste als auch der zweite und der dritte Zahn (13a, 13b, 13c) sich in rechten Winkeln zu der externen Umfangskante (15) an der gegenüberliegenden Seite dazu erstrecken und in einer Stufe (16) enden, die senkrecht zu der unteren Oberfläche (17) der ersten, vorstehenden Lasche (9a) ist.

8. Der Kotflügel (1) gemäß einem oder mehreren der obigen Ansprüche 2-7, **dadurch gekennzeichnet, dass** die Griffmittel (5a) der ersten Kotflügelhälfte (2) an einer flachen Basis (19a) eines U-förmigen Elements (20a) angebracht sind, das unterhalb der zweiten, aufnehmenden Lasche (10a) vorsteht, wobei die Griffmittel (5a) aus einem ersten Sitz, einem zweiten Sitz und einem dritten Sitz (23a, 23b, 23c) bestehen, wobei der erste Sitz (23a) an der flachen Basis (19a), an dem ersten Flügel (12a) der zweiten Lasche (10a), im Wesentlichen angrenzend an die V-förmige Kerbe (8), angebracht ist; wobei der zweite Sitz (23b) an der flachen Basis (19a), an dem ersten Flügel (12a) der zweiten Lasche (10a), im Wesentlichen in einem intermediären Bereich zwischen der V-förmigen Kerbe (8) und dem zweiten Flügel (12b) der zweiten, aufnehmenden Lasche (10a) angebracht ist; wobei der dritte Sitz (23c) an der flachen Basis (19a), im Wesentlichen am abschließenden Ende des zweiten Flügels (12b) der zweiten, aufnehmenden Lasche (10a), angebracht ist.

9. Der Kotflügel (1) gemäß einem oder mehreren der obigen Ansprüche 2-8, **dadurch gekennzeichnet, dass** das Element (20a) mit Bezug auf den darüberliegenden ersten Flügel (12a) und den zweiten Flügel (12b) einen Hohlraum (21a) bestimmt, wobei die flache Basis (19a) und der Hohlraum (21a) im Wesentlichen die gesamte Länge der zweiten, aufnehmenden Lasche (10a) betreffen, um den ersten Flügel und den zweiten Flügel (12a, 12b) ausgehend von einem Bereich angrenzend an die V-förmige Kerbe (8) zu beeinflussen.

10. Der Kotflügel (1) gemäß einem oder mehreren der obigen Ansprüche 2-9, **dadurch gekennzeichnet, dass** eine Vielzahl von Abstandshaltern (25) sich in rechten Winkeln zu einer oberen Oberfläche (24) der ersten, vorstehenden Lasche (9a) erstrecken und ausgebildet sind, um die Zentrierung und Positionierung des ersten, des zweiten und des dritten Zahns (13a, 13b, 13c) zu erleichtern, wobei die ersten Abstandshalter (25) in dem Hohlraum (121b) aufgenommen sind.

11. Der Kotflügel (1) gemäß einem oder mehreren der obigen Ansprüche 2-10, **dadurch gekennzeichnet, dass** der erste, der zweite und der dritte Sitz (23a, 23b, 23c) an der flachen Basis (19a) angebracht und ausgebildet sind, um die Eingriffsmittel (4b) fest aufzunehmen, die aus einem ersten Zahn, einem zweiten Zahn und einem dritten Zahn (13d, 13e, 13f) bestehen, welche in der zweiten Kotflügelhälfte (6) angebracht sind, wobei der erste, der zweite und der dritte Zahn (13d, 13e, 13f) an einem ersten Flügel (111a) der ersten, vorstehenden Lasche (109a) der zweiten Kotflügelhälfte (6) angebracht sind und dem ersten, zweiten und dritten Zahn (13a, 13b, 13c) der ersten Kotflügelhälfte (2) entsprechen, wobei die Eingriffsmittel (4a) somit eine Entsprechung zu den Eingriffsmitteln (4b) bilden.

12. Der Kotflügel (1) gemäß einem oder mehreren der obigen Ansprüche 2-11, **dadurch gekennzeichnet, dass** die Griffmittel (5b), die an der zweiten Kotflügelhälfte (6) angebracht sind, aus einem ersten Sitz, einem zweiten Sitz und einem dritten Sitz (123a, 123b, 123c) bestehen, wobei die Sitze an einer flachen Basis (119b) eines Elements (120b) angebracht sind, welches in Form und Struktur dem Element (20a) entspricht und einen Hohlraum (121b) bestimmt und ausgebildet ist, um die Eingriffsmittel (4a) fest aufzunehmen, die an der ersten Kotflügelhälfte (2) an der zweiten, aufnehmenden Lasche (110a) angebracht sind, welche einen ersten Flügel (112a) bestimmt.

13. Der Kotflügel (1) gemäß einem oder mehreren der obigen Ansprüche 2-12, **dadurch gekennzeichnet, dass** in dem Ausgangsschritt der Kopplung zwischen der ersten Kotflügelhälfte (2) und der zweiten Kotflügelhälfte (6) jeder der ersten, zweiten und dritten Zähne (13a, 13b, 13c, 13d, 13e, 13f) in axialer Anordnung und an den jeweiligen ersten, zweiten und dritten Sitzen (23a, 23b, 23c, 123a, 123b, 123c) angeordnet ist, wobei eine stabile Kopplung erzielt wird, wenn jeder der ersten, zweiten und dritten Zähne (13a, 13b, 13c, 13d, 13e, 13f) nach oben geschoben wird, bis er vollständig in den jeweiligen ersten, zweiten und dritten Sitzen (23a, 23b, 23c, 123a, 123b, 123c) aufgenommen ist.

14. Der Kotflügel (1) gemäß einem oder mehreren der obigen Ansprüche 2-13, **dadurch gekennzeichnet, dass** ein Paar von Schienen (36a, 36b) fest an der externen Oberfläche (35) der zweiten Kotflügelhälfte (6) oder an der externen Oberfläche der ersten Kotflügelhälfte (2) angebracht ist, zum Gleiten eines Paares von Befestigungsösen (37a, 37b), in denen ein Rohr (38) herausnehmbar angebracht und mit dem Fahrgestell des Fahrzeugs verbunden ist.

## Revendications

1. Pare-boue (1) pour véhicule, le pare-boue comprenant au moins un premier demi pare-boue (2) qui possède, sur au moins une première extrémité libre (3), laquelle est agencée, en cours d'utilisation, au-dessus d'une roue sensiblement approximativement au diamètre de la roue à angle droit par rapport au sol, des moyens d'accouplement (4a) et des moyens de préhension (5a) pour un couplage amovible à
un second demi pare-boue (6) séparé et identique qui est également pourvu de moyens d'accouplement (4b) et de moyens de préhension (5b),
chacun desdits moyens d'accouplement (4a, 4b) étant respectivement disposé adjacent à chacun desdits moyens de préhension (5a, 5b) de sorte que chacun affecte la moitié de l'étendue transversale de la première extrémité libre respective (3).

2. Pare-boue (1) suivant la revendication 1, **caractérisé en ce que** ladite première extrémité libre (3) présente transversalement une forme sensiblement en C et possède centralement une fente en forme de V (8) qui divise transversalement, approximativement à mi-chemin, ladite première extrémité libre (3) de sorte à définir une première languette mâle (9a, 109a), à laquelle une seconde languette femelle (10a, 110a) est contiguë.

3. Pare-boue (1) suivant la revendication 2, **caractérisé en ce que** chacune desdites première et seconde languettes (9a, 10a) présente transversalement une forme sensiblement en L de sorte à définir respectivement une première aile (11a, 12a) sensiblement horizontale et plus large, ailes qui sont mutuellement adjacentes latéralement et séparées par ladite fente en forme de V (8) et une seconde aile (11b, 12b) qui est sensiblement verticale par rapport aux précédentes et plus étroite, dirigée vers le bas par rapport auxdites premières ailes (11a, 12a) et combinées avec celles-ci en forme de courbe.

4. Pare-boue (1) suivant une ou plusieurs des revendications précédentes 2 à 3, **caractérisé en ce que** lesdits moyens d'accouplement (4a) dudit premier demi pare-boue (2) sont associés de façon stable sous ladite première languette mâle (9a) et constitués par au moins une première dent (13a) qui fait saillie sous une surface inférieure (17) de ladite première aile (11a) de ladite première languette (9a), et par au moins une troisième dent (13c) qui fait saillie sous une extrémité terminale (18) de ladite seconde aile (11b) de ladite première languette mâle (9a), ledit premier demi pare-boue (2) présentant transversalement une configuration courbe approximativement en forme de C qui se situe sensiblement sur un arc de cercle qui sous-tend un angle de 90 degrés sensiblement.

5. Pare-boue (1) pour véhicule suivant une ou plusieurs des revendications précédentes 2 à 4, **caractérisé en ce que** lesdits moyens de préhension (5a) dudit premier demi pare-boue (2) sont situés sur une base plate (19a) d'un élément en forme d'U (20a) qui fait saillie sous ladite seconde languette femelle (10a) et constitués par au moins un premier siège (23a) qui est disposé sur ladite base plate (19a) au niveau de ladite première aile (12a) de ladite seconde languette (10a), et par au moins un troisième siège (23c) qui est disposé sur ladite base plate (19a) au niveau de l'extrémité terminale de ladite seconde aile (12b) de ladite seconde languette femelle (10a).

6. Pare-boue (1) suivant une ou plusieurs des revendications précédentes 2 à 5, **caractérisé en ce que** lesdits moyens d'accouplement (4a) sont associés de façon stable sous ladite première languette mâle (9a) et constitués par une première dent, une seconde dent et une troisième dent (13a, 13b, 13c), ladite première dent (13a) faisant saillie sous une surface inférieure (17) de ladite première aile (11a) de ladite première languette (9a) sensiblement au voisinage de ladite fente en forme de V (8), ladite seconde dent (13b) faisant saillie sous ladite surface inférieure (17) de ladite première aile (11a) de ladite première languette (9a), sensiblement dans une zone intermédiaire entre ladite fente en forme de V (8) et ladite seconde aile (11b) de ladite première languette mâle (9a), et ladite troisième dent (13c) faisant saillie sensiblement sous une extrémité terminale (18) de ladite seconde aile (11b) de ladite première languette (9a).

7. Pare-boue (1) suivant la revendication 6, **caractérisé en ce que** lesdites première, seconde et troisième dents (13a, 13b, 13c) sont sensiblement triangulaires et font saillie sous ladite première languette (9a) avec un sommet (14) qui est adjacent à un bord périmétrique externe (15) de ladite première languette mâle (9a), chacune parmi lesdites première, seconde et troisième dents (13a, 13b, 13c) s'étendant à angle droit par rapport audit bord périmétrique externe (15), vers le côté opposé de celui-ci, et se terminant avec un gradin (16) qui est perpendiculaire à ladite surface inférieure (17) de ladite première languette mâle (9a).

8. Pare-boue (1) suivant une ou plusieurs des revendications précédentes 2 à 7, **caractérisé en ce que** lesdits moyens de préhension (5a) dudit premier demi pare-boue (2) sont situés sur une base plate (19a) d'un élément en forme d'U (20a) qui fait saillie sous ladite seconde languette femelle (10a), lesdits moyens de préhension (5a) étant constitués par un premier siège, un second siège et un troisième siège (23a, 23b, 23c), ledit premier siège (23a) étant disposé sur ladite base plate (19a), au niveau de ladite première aile (12a) de ladite seconde languette (10a) sensiblement dans le voisinage de ladite fente en forme de V (8), ledit second siège (23b) étant disposé sur ladite base plate (19a) au niveau de ladite première aile (12a) de ladite seconde languette (10a) sensiblement dans une zone intermédiaire entre ladite fente en forme de V (8) et ladite seconde aile (12b) de ladite seconde languette femelle (10a), ledit troisième siège (23c) étant disposé sur ladite base plate (19a) sensiblement au niveau de l'extrémité terminale de ladite seconde aile (12b) de ladite seconde languette femelle (10a).

9. Pare-boue (1) suivant une ou plusieurs des revendications précédentes 2 à 8, **caractérisé en ce que** ledit élément (20a) définit une cavité (21a) par rapport à ladite première aile superposée (12a) et à ladite seconde aile (12b), ladite base plate (19a) et ladite cavité (21a) affectant sensiblement sur toute la longueur de ladite seconde languette femelle (10a) de sorte à affecter ladite première aile et ladite seconde aile (12a, 12b) à partir d'une zone au voisinage de ladite fente en forme de V (8).

10. Pare-boue (1) suivant une ou plusieurs des revendications précédentes 2 à 9, **caractérisé en ce qu'**une pluralité d'espaceurs (25) s'étendent à angle droit par rapport à une surface supérieure (24) de ladite première languette mâle (9a) et sont adaptés à faciliter le centrage et le placement desdites première, seconde et troisième dent (13a, 13b, 13c), lesdits premiers espaceurs (25) étant logés dans ladite cavité (121b).

11. Pare-boue (1) suivant une ou plusieurs des revendications précédentes 2 à 10, **caractérisé en ce que** lesdits premier, second et troisième sièges (23a, 23b, 23c) sont disposés sur ladite base plate (19a) et adaptés à loger de façon stable lesdits moyens d'accouplement (4b) constitués par une première dent, une seconde dent et une troisième dent (13d, 13 e, 13f) situées dans ledit second demi pare-boue (6), lesdites première, seconde et troisième dents (13d, 13^{e}, 13f) étant disposées sur une première aile (111a) de ladite première languette mâle (109a) dudit second demi pare-boue (6) et analogues auxdites première, seconde et troisième dents (13a, 13b, 13c) dudit premier demi pare-boue (2), lesdits moyens d'accouplement (4a) trouvant ainsi une correspondance auxdits moyens d'accouplement (4b).

12. Pare-boue (1) suivant une ou plusieurs des revendications précédentes 2 à 11, **caractérisé en ce que** lesdits moyens de préhension (5b) situés sur ledit second demi pare-boue (6) sont constitués par un premier siège, un second siège et un troisième siège (123a, 123b, 123c), lesdits sièges étant situés au niveau d'une base plate (119b) d'un élément (120b), qui est analogue en forme et structure audit élément (20a) et définit une cavité (121b), et adaptés à loger de façon stable lesdits moyens d'accouplement (4a) qui sont disposés sur ledit premier demi pare-boue (2) au niveau de ladite seconde languette femelle (110) qui définit une première aile (112a).

13. Pare-boue (1) suivant une ou plusieurs des revendications précédentes 2 à 12, **caractérisé en ce qu'**à l'étape initiale de couplage entre ledit premier demi pare-boue (2) et ledit second demi pare-boue (6), chacune desdites première, seconde et troisième dents (13a, 13b, 13c; 13d, 13e, 13f) se place elle-même en alignement axial et au niveau desdits premier, second et troisième sièges (23a, 23b, 23c, 123a, 123b, 123c), un couplage stable étant obtenu lorsque chacune parmi lesdites première, seconde et troisième dents (13a, 13b, 13c, 13d, 13^{e}, 13f) est poussée vers le haut jusqu'à ce qu'elle soit logée complètement dans lesdits premier, second et troisième sièges (23a, 23b, 23c, 123a, 123b, 123c) respectifs.

14. Pare-boue (1) suivant une ou plusieurs des revendications précédentes 2 à 13, **caractérisé en ce qu'**une paire de rails (36a, 36b) est disposée de façon stable sur la surface externe (35) dudit second demi pare-boue (6) ou sur la surface externe dudit premier demi pare-boue (2) pour faire coulisser une paire d'œillets de fixation (37a, 37b), dans lesquelles un tube (38) est disposé de façon amovible et associée au châssis dudit véhicule.
